(19) Europäisches Patentamt
European Patent Office
Office européen des brevets

(11) **EP 2 421 139 B1**

(12) **EUROPEAN PATENT SPECIFICATION**

(45) Date of publication and mention
of the grant of the patent:
**22.02.2017 Bulletin 2017/08**

(21) Application number: **10764248.0**

(22) Date of filing: **12.04.2010**

(51) Int Cl.:
*H02M 7/12* (2006.01)   *H02P 29/00* (2016.01)

(86) International application number:
**PCT/JP2010/002647**

(87) International publication number:
**WO 2010/119661 (21.10.2010 Gazette 2010/42)**

(54) **DC POWER-SUPPLY DEVICE AND APPLICATION SYSTEM THEREOF**

GLEICHSTROMNETZTEIL UND VERFAHREN ZU SEINER ANWENDUNG

DISPOSITIF D'ALIMENTATION ÉLECTRIQUE EN COURANT CONTINU ET SYSTÈME D'APPLICATION DE CELUI-CI

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.04.2009 JP 2009096862**

(43) Date of publication of application:
**22.02.2012 Bulletin 2012/08**

(73) Proprietor: **Panasonic Corporation**
**Kadoma-shi**
**Osaka 571-8501 (JP)**

(72) Inventors:
• **DOYAMA, Yoshiaki**
**2-1-61 Shiromi, Chuo-ku**
**Osaka 540-6207 (JP)**
• **KYOGOKU, Akihiro**
**2-1-61 Shiromi, Chuo-ku**
**Osaka 540-6207 (JP)**
• **KAWASAKI, Tomohiro**
**2-1-61 Shiromi, Chuo-ku**
**Osaka 540-6207 (JP)**

(74) Representative: **Eisenführ Speiser**
**Patentanwälte Rechtsanwälte PartGmbB**
**Postfach 31 02 60**
**80102 München (DE)**

(56) References cited:
**EP-A2- 0 784 372       EP-A2- 1 919 064**
**DE-A1- 19 854 567       JP-A- 10 155 293**
**JP-A- 2008 113 514       JP-U- 63 021 865**
**US-A1- 2006 164 874       US-B1- 6 320 772**

**Description**

Technical Field

The present invention relates to a DC power-supply device configured to rectify an output of an AC power supply to a direct current so as to supply a load with the electric power, and an application system using the DC power-supply device.

Background Art

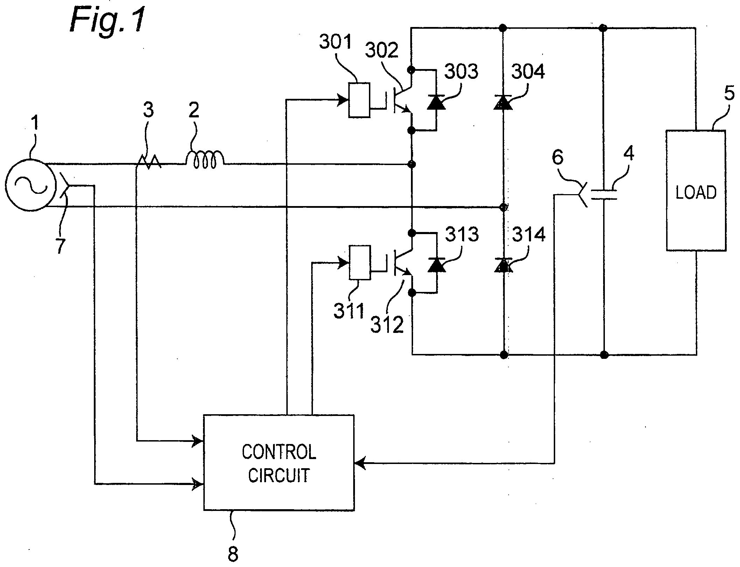

A conventional DC power-supply device employs a circuit configuration which causes an alternating current to flow even in a period where an instantaneous voltage of an AC voltage is low. For example, as shown in Fig. 1, the conventional DC power-supply device converts an output from an AC power supply 1 into a DC power through a reactor 2, and a bridge circuit structured with switching elements 302 and 312 each being a semiconductor switch and diodes 303, 304, 313, and 314, and smoothes the DC power with a capacitor 4, to supply a load 5 with the DC power. The DC power-supply device detects an AC voltage, an alternating current, and a DC voltage by an AC voltage waveform detector 7, a current detector 3, and a DC voltage detector 6. The DC power-supply device generates a drive signal for the switching elements 302 and 312 based on the detected values such that the DC voltage attains a desired value, and an alternating current flowing from the AC power supply has a similar wave form (i.e., a sinusoidal wave) with reference to the waveform of the AC voltage, to control the driving operation of the switching elements 302 and 312.

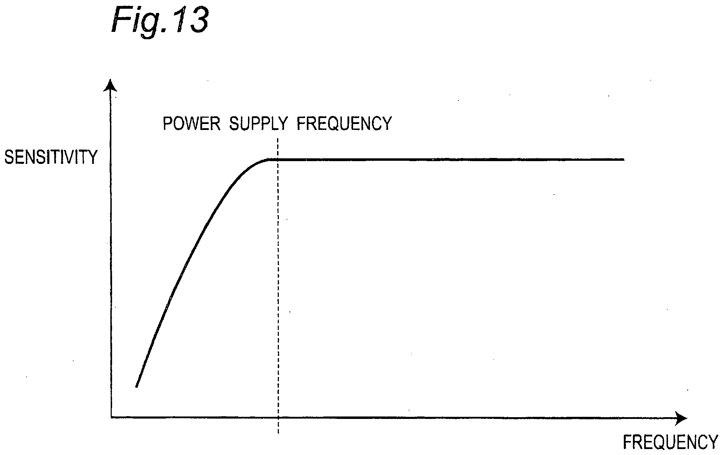

As the current detector 3 that detects an alternating current, a simple AC transformer (e.g., a current transformer) can be used. However, as shown in Fig. 13, the AC transformer has such a frequency characteristic that the sensitivity becomes poor at a frequency equal to or less than a power supply frequency. Therefore, it cannot reproduce an instantaneous current waveform. Further, control of the current waveform starts from one-side phase of the AC voltage. Here, since the current is asymmetric when the control starts, it inevitably contains a DC component. However, what is detected by the AC transformer is the waveform from which the DC component is removed. Accordingly, even when the control of the current waveform is stabilized, the DC component remains in the actual current. When a DC component is contained in a current or electric power from the AC power supply, it incurs an abnormality such as a loss increase in the transformer in an electric power system.

In order to detect a direct current, a current sensor using a Hall element, a configuration that detects a potential difference between the opposite ends of a resistor serially inserted into a circuit and the like becomes necessary. However, a current sensor using the Hall' element and the like must include therein a precise circuit for correcting temperature and the like, and hence, it is expensive. Further, according to the technique employing resistor insertion, since a current flows through the resistor, loss is incurred and the resistor generates heat. Further, it is difficult to insulate between the resistor and the control circuit.

Patent document 1 discloses a method for reducing a DC component included in a drive signal using an AC transformer, and without using a current sensor or the resistor insertion technique. As shown in a control block diagram of Fig. 14, a DC power-supply device disclosed in the patent document 1 is configured to compare a DC voltage command and an actual DC voltage obtained from a power circuit 107 against each other with a comparator 101, and to send the comparison result (i.e., a voltage deviation) to a multiplier circuit 103 through a voltage system compensation calculator unit 102. The multiplier circuit 103 multiplies a value represented by instantaneous AC voltage information and a value represented by information based on the voltage deviation, and sends the result to a comparator 104 as an instantaneous current command. That is, the DC power-supply device modulates an instantaneous AC voltage waveform with the information based on the voltage deviation, to thereby obtain an instantaneous current command having the same waveform as the instantaneous AC voltage waveform. The comparator 104 compares the instantaneous current command against the instantaneous current information obtained from the power circuit 107 through a current transformer for detecting a current. The result of the comparator 104 (i.e., a current deviation) is sent as a drive signal to the power circuit 107 through a current system compensation calculator unit 105 and a DC component removing circuit 801. As a result of the power circuit 107 being driven, an instantaneous current and a DC voltage are obtained. By feeding back the obtained instantaneous current to the comparator 104, and feeding back the obtained DC voltage to the comparator 101, a feedback control loop is formed. The DC power-supply device of the patent document 1 includes the DC component removing circuit 801 in front of the power circuit 107 such that the DC component removing circuit 801 removes any DC component from the drive signal to the power circuit 107, for the purpose of reducing the DC component included in the alternating current as much as possible.

Patent Document 2 discloses a power supply circuit which comprises a rectifier circuit for converting an AC voltage to a DC voltage, a boost chopper circuit for boosting an output voltage of the rectifier circuit based on a duty ratio signal, a smoothing circuit for smoothing an output voltage of the boost chopper circuit, and a control means for creating the duty ratio signal. The control means is provided with a function for generating a DC voltage ripple information of the smoothing circuit, and correcting or modifying the duty ratio signal based on the DC voltage ripple information.

Moreover, Patent Document 3 discloses a method for controlling a rectifier circuit and to a corresponding rectifier circuit. The rectifier circuit includes an electric rectifier in row with an inductance, a diode and a load. Parallel to the load a capacity is provided and parallel to the series connection formed by the diode and the load, a controlled switch is arranged which is connected to a control unit which produces a control signal on the basis of the voltage over the load.

Moreover, Patent Document 4 discloses an AC-DC converter which includes an adjusting unit operating to zero the difference between a DC output voltage instruction value and a DC output voltage detection value. Moreover, a modulator is provided which compares a carrier wave based on an output signal of the adjusting unit with a modulating wave to output drive pulses. A switching element is turned on and off with a drive pulses to provide a DC output voltage which is higher than a full-wave rectification voltage of an AC input voltage.

Prior Art Document

Patent Document

Patent Document 1: JP 2002-359976 A
Patent Document 2: EP 1 919 064 A2
Patent Document 3: DE 198 54 567 A1
Patent Document 4: EP 0 784 372 A2

Summary of Invention

Problems to be Solved by the Invention

However, as in the patent document 1, even when the,DC component is removed from the drive signal, the DC component in the alternating current may not completely be removed. For example, when the two switching elements 302 and 312 shown in Fig. 1 differ from each other in characteristic, a current flows in different ways between the positive phase and the negative phase of the AC power supply, and the DC component will be included in the inflowing current from the AC power supply. Further, in a case where the AC voltage waveform is distorted, removal of the DC component in the drive signal not always provides zero DC components in the electric power flowing from the power supply. When the DC component in the alternating current cannot completely be removed, an abnormality such as a loss increase in the AC power system occurs.

Further, the control disclosed in the patent document 1 can only be applied to a DC power-supply device in which two serially connected switching elements 302 and 312 such as shown in Fig. 1 are arranged in parallel to the DC output, and the switching elements 302 and 312 are turned on and off complementarily.

In a case of the power-supply device shown in Fig. 1, when the two switching elements 302 and 312 are driven, it is practically necessary to prevent the two switching elements 302 and 312 from simultaneously turning on, so as not to short-circuit the DC output. Generally, switching elements such as IGBTs often differ between an on-speed and an off-speed. Additionally, often the off-speed is slower. Accordingly, the off-period of each of the switching elements 302 and 312 are prolonged, so as to provide a period in which both the switching elements are off. Thus, an error occurs between the drive signal to the switching elements 302 and 312 and the actual on/off state of the switching elements 302 and 312, which results in a waveform distortion. This distortion assumes a greater value as the switching frequency is higher, which becomes one of the barriers when the reactor is miniaturized. Further, it necessitates a protection circuit that safely stops the circuit when the switching elements simultaneously turn on by malfunction attributed to external noises and the like.

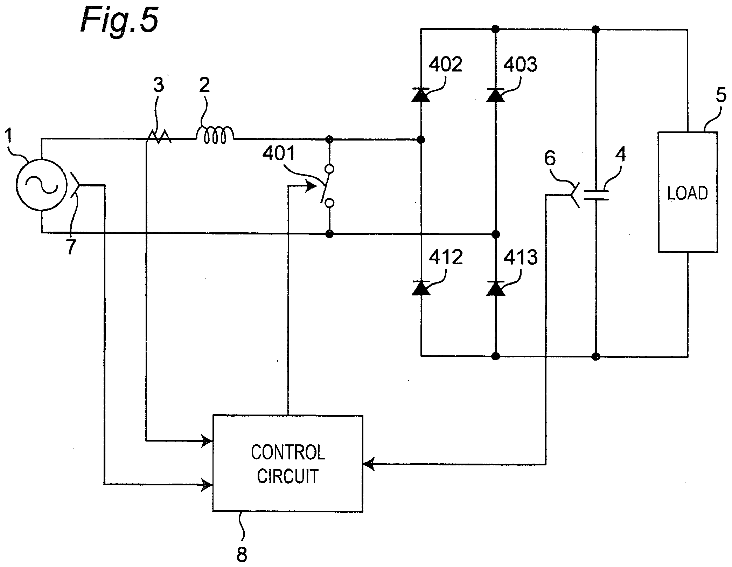

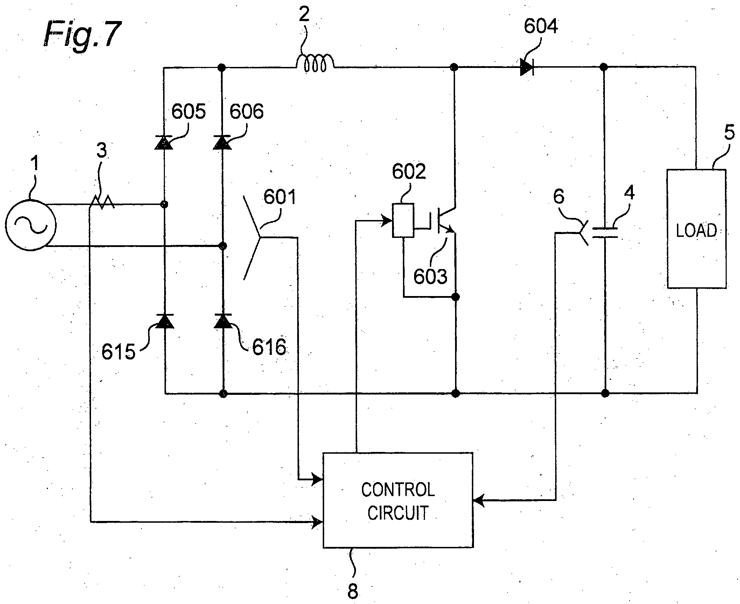

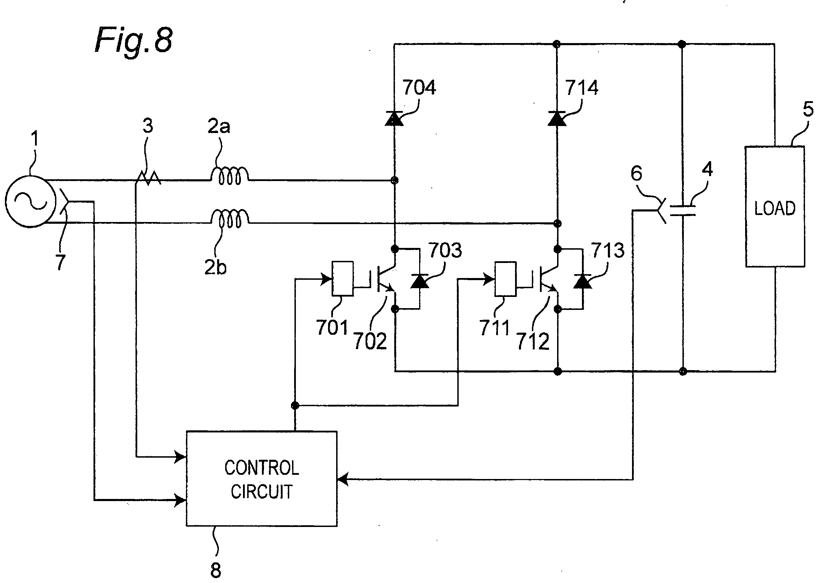

As a circuit configuration that avoids the problem associated with the DC power-supply device shown in Fig. 1, for example, there are provided DC power-supply devices shown in Figs. 5, 7 and 8. The DC power-supply device shown in Fig. 5 has a configuration in which an AC power supply 1 is short-circuited by a reactor 2 and a bidirectional switch element 401. The DC power-supply device shown in Fig. 7 has a circuit configuration in which an AC power supply 1 is rectified by diodes 605, 606, 615, and 616 and then short-circuited by a reactor 2 and a switching element 603. The DC power-supply device shown in Fig. 8 has a circuit configuration in which an AC power supply 1 is short-circuited by switching elements 702 and 712 and diodes 703 and 713 through reactors 2a and 2b. As to the DC power-supply devices shown in Figs. 5, 7, and 8, respectively, a drive signal for turning on/off the switching elements can be implemented one in number. Therefore, for all such devices, it is not necessary to take into consideration of short-circuiting on the DC side.

In such circuit configurations, the on-off ratio of the drive signal steadily approximates the value of the following formula.

$$\text{"on-ratio"} \approx 1 - \text{"an absolute value of an instantaneous value of AC voltage"} / \text{"DC output voltage"}$$

From this formula, since the on-ratio is substantially determined by the AC voltage and the DC output voltage, it can be seen that the means for removing the DC component included in the result as in the patent document 1 does not function. Accordingly, the DC power-supply devices shown in Figs. 5, 7, and 8 require another technique different from that of the patent document 1, in order to remove a DC component.

As has been described in the foregoing, the conventional control involves a problem that a DC component flowing from the AC power supply cannot fully be removed because of the effect of the distortion of the AC power supply voltage and the like, which invites an abnormality such as a loss increase in the AC power system. Further, the conventional control involves the problem that the number and the configuration of applicable switching elements and the drive signals thereof are limited.

The present invention has been made to solve the conventional problems stated above, and an object thereof is to provide a DC power-supply device that prevents an occurrence of an abnormality such as a loss increase in an AC power system and an application system using, the DC power-supply device. Specifically, an object of the present invention is to provide a DC power-supply device that is applicable irrespective of the number and configuration of the switching elements and the drive signals thereof and that is capable of removing the DC component flowing from the AC power supply without being affected by the distortion of the AC power supply voltage, and an application system using the DC power-supply device.

Means for Solving the Problems

In order to solve the conventional problems stated above, a DC power-supply device of the present invention is defined in claim 1. In particular, the inventive DC power-supply device is a DC power-supply device for converting an AC voltage into a DC voltage to output the converted DC voltage. The DC power-supply device includes: a switching element configured to short-circuit an AC power supply through a reactor; a current detector unit configured to detect a current flowing from the AC power supply and output the detected AC current as current information; and a control unit configured to turn the switching element on and off such that a waveform of a current represented by the current information detected by the current detector unit becomes a substantially sinusoidal wave. The control unit removes a DC component from the AC power supply without detecting the DC component from the AC power supply by extracting an undulation of a frequency component which is the same as an AC power supply frequency and is contained in the DC voltage to be output, superimposing a DC component which is in an opposite direction to the extracted frequency component, and correcting an on-off ratio of the switching element to be turned on and off such that the extracted undulation of the frequency component which is the same as the AC power supply frequency is cancelled out.

When the current is great only at one polarity of the AC power supply, the DC voltage rises at the timing of the corresponding phase, and a frequency component identical to the power supply frequency appear in the DC voltage. By extracting the frequency component, and correcting the on-off ratio of the switching element such that the extracted undulation of the frequency component being the same as the AC power supply frequency is cancelled out (e.g., in proportional to the amplitude value of the frequency component), the DC component from the AC power supply can be removed. Hence, an occurrence of an abnormality such as a loss increase in the AC power system can be prevented.

The current detector unit may be an AC transformer. With the DC power-supply device of the present invention, the DC component from the AC power supply can be removed without detecting the DC component from the AC power supply. Hence, it becomes possible to employ the AC transformer incapable of detecting the DC component. Thus, a cost-effective DC power-supply device can be provided.

The control unit may include a frequency characteristic corrector unit configured to correct the current information detected by the AC transformer using a frequency characteristic of the AC transformer, and the control unit may turn the switching element on and off such that a waveform of a current represented by the current information corrected by the frequency characteristic corrector unit becomes a substantially sinusoidal wave. Thus, since the instantaneous current further approximates a sinusoidal wave, the power factor being the usage efficiency of the AC power supply can further be improved.

The control unit may pause the switching element from being turned on and off when an absolute value of an instantaneous value represented by the current information detected by the current detector unit or the current information corrected by the frequency characteristic corrector unit exceeds a first prescribed level. Since detection of an overload state of the switching element can be realized without the necessity of using another detection unit, the configuration of the DC power-supply device can be simplified.

The control unit may stop the switching element from being turned on and off when the absolute value of the instantaneous value represented by the current information detected by the current detector unit or the current information corrected by the frequency characteristic corrector unit exceeds a second prescribed level greater than the first prescribed level. In a case where the current does not drastically decrease irrespective of detection of the current exceeding over the first prescribed level, by stopping the operation of the device, any damage to the device can be prevented.

The control unit may average an amplitude component of a current value represented by the current information detected by the current detector unit or the current information corrected by the frequency characteristic corrector unit over a period equal to or more than a cycle of the AC power supply, and when the averaged value is greater than a third prescribed level, the control unit may decrease the DC voltage to be output. Thus, the operation can be carried out without the power supply being failed in an overload state, and without the power supply being shut down because of the AC power supply side becoming overloaded.

An application system of the present invention is defined in claim 7. In particular, the inventive application system includes the above-described DC power-supply device, and a motor driven by an output of the DC power-supply device. An amplitude component of a current value represented by the current information detected by the current detector unit of the DC power-supply device is averaged over a period equal to or more than a cycle of an AC power supply, and when the averaged value is greater than a fourth prescribed level, the rotation speed of the motor is decreased. Accordingly, a load connected to the DC power output is alleviated, and the operation thus can be carried out without the DC power supply being failed and without the power supply being shut down because of the AC power supply side becoming overloaded.

A DC power-supply device according to another aspect of the present invention is defined in claim 8. In particular, the inventive DC power-supply device is a DC power-supply device converting an AC voltage into a DC voltage and outputting the converted DC voltage. The DC power-supply device includes: a switching element configured to short-circuit an AC power supply through a reactor; and a control unit configured to turn the switching element on and off such that a

current flowing from the AC power supply has a substantially sinusoidal wave. The control unit removes a DC component from the AC power supply without detecting the DC component from the AC power supply by extraction an undulation of a frequency component which is the same as an AC power supply frequency and is contained in a DC voltage to be output, and correcting an on-off ratio of the switching element to be turned on and off in accordance with the extracted undulation of the frequency component which is the same as the AC power supply frequency and a signal obtained by modulating a predetermined basic pattern or a basic pattern based on an AC voltage waveform in accordance with a deviation between the DC voltage and a targeted DC voltage, such that the extracted undulation of the frequency component which is the same as the AC power supply frequency is cancelled out.

Effects of the Invention

According to the present invention, an AC power supply frequency component contained in a DC voltage to be output is extracted. The extracted undulation of the frequency component being the same as the AC power supply frequency component is cancelled out and the on-off ratio for a switching element to be turned on and off is corrected. Thus, when a DC component is contained in an alternating current to be output from the AC power supply, the DC component flowing from the AC power supply can be removed. Hence, an abnormality such as a loss increase in the AC power system and the like can be prevented. Further, according to the present invention, the DC component flowing from the AC power supply can be removed by a simple method, without limiting the number and the configuration of the switching element and the drive signals thereof. Further, according to the present invention, since the DC component in the AC electric power from the AC power supply is detected, it is applicable to a case where the voltage waveform is distorted.

Brief Description of Drawings

Fig. 1 is a diagram showing a circuit configuration of a DC power-supply device according to a first embodiment of the present invention.

Fig. 2 is a block diagram showing a control flow of a control circuit according to the first embodiment of the present invention.

Fig. 3 is a waveform diagram where a DC component from an AC power supply is absent, in which (a) shows an alternating current, (b) shows a rectified current, (c) shows a DC voltage, and (d) shows a power supply frequency component.

Fig. 4 is a waveform diagram where a DC component from the AC power supply is contained, in which (a) shows an alternating current, (b) shows a rectified current, (c) shows a DC voltage, and (d) shows a power supply frequency component.

Fig. 5 is a diagram showing another circuit configuration of the DC power-supply device according to the first embodiment of the present invention.

Figs. 6A, 6B, and 6C show circuit diagrams each showing a specific configuration of a bidirectional switch shown in Fig. 5, Fig. 6A is a circuit diagram of a butt configuration of IGBTs having anti-parallel diodes, Fig. 6B is a circuit diagram of an anti-parallel connection configuration of reverse blocking IGBTs, and Fig. 6C is a circuit diagram in which polarity is one-sided by diodes and short-circuit is established by IGBT.

Fig. 7 is a diagram showing another circuit configuration of the DC power-supply device according to the first embodiment of the present invention.

Fig. 8 is a diagram showing another circuit configuration of the DC power-supply device according to the first embodiment of the present invention.

Fig. 9 is a block diagram showing a control flow of a control circuit according to a second embodiment of the present invention;

Fig. 10 is a diagram showing a characteristic of a frequency characteristic corrector circuit shown in Fig. 9.

Fig. 11 is a block diagram showing a control flow of a control circuit according to a third embodiment of the present invention.

Fig. 12 is a circuit configuration of an application system using a DC power-supply device according to a fourth embodiment of the present invention.

Fig. 13 is a diagram showing a frequency characteristic of an AC transformer.

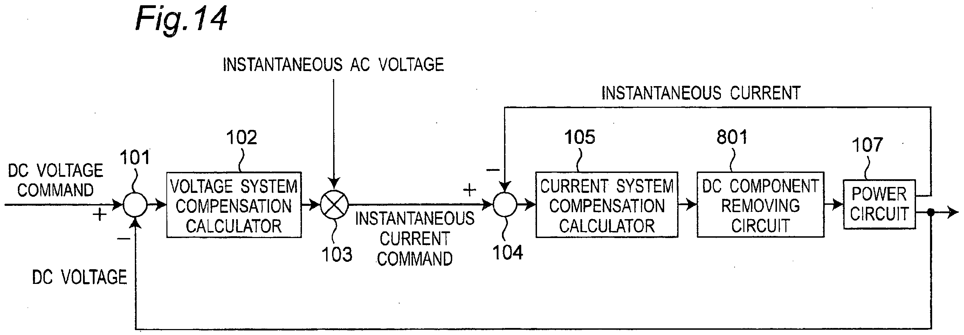

Fig. 14 is a block diagram showing a control flow in a conventional DC power-supply device.

Description of Embodiments

In the following, with reference to the drawings, embodiments of the present invention will be described. It is to be noted that the present invention is not limited by the embodiments.

(First Embodiment)

A DC power-supply device according to first embodiment of the present invention determines a DC component contained in an alternating current flowing from an AC power supply based on a power supply frequency component contained in a DC voltage to be output, and corrects an on-off ratio of switching elements based on the determination result, to thereby remove the DC component flowing from the AC power supply. Specifically, the DC power-supply device extracts the power supply frequency component contained in the DC voltage to be output, and corrects the on-off ratio of the switching elements based on the information of an amplitude of the extracted power supply frequency component. Thus, in a case where a DC component is contained in the alternating current output from the AC power supply, it becomes possible to remove the DC component flowing from the AC power supply. Hence, it becomes possible to prevent an abnormality such as a loss increase in the AC power system, and to improve a power factor from the AC power supply.

1.1 Structure of DC Power-Supply Device

Fig. 1 shows the DC power-supply device according to the first embodiment of the present invention. The DC power-supply device has a circuit configuration in which an alternating current flows even in a period where an instantaneous voltage of an AC voltage is low. The DC power-supply device has a reactor 2 connected to an AC power supply 1, a bridge circuit connected to the reactor 2, and a capacitor 4 connected to the bridge circuit. The bridge circuit includes switching elements 302 and 312 each being a semiconductor switch, and diodes 303, 304, 313, and 314. In the present embodiment, the switching elements 302 and 312 are IGBTs. The DC power-supply device converts AC electric power output from the AC power supply 1 into DC power through the reactor 2 and the bridge circuit. Further, it smoothes the DC power with the capacitor 4, and supplies the smoothed DC power to a load 5.

The DC power-supply device shown in Fig. 1 further includes a control circuit (control unit) 8 that controls on/off operations of the switching elements 302 and 312. The control circuit 8 exerts feedback control such that the alternating current has a sinusoidal wave. To the switching elements 302 and 312, gate drive circuits 301 and 311 that control a gate voltage of the switching elements 302 and 312 based on drive signals from the control circuit 8 are connected. The DC power-supply device further includes an AC voltage waveform detector 7, a current detector 3, and a DC voltage detector 6. The AC voltage waveform detector 7 detects an AC voltage output from the AC power supply 1. The current detector 3 detects an alternating current output from the AC power supply 1. In the present embodiment, the current detector 3 is an AC transformer. The DC voltage detector 6 detects a DC voltage smoothed by the capacitor 4. The control circuit 8 drives the switching elements 302 and 312 based on the output of the AC voltage waveform detector 7, the current detector 3, and the DC voltage detector 6, such that the DC voltage to be output attains a desired value and the alternating current from the AC power supply 1 has the similar wave form (substantially sinusoidal wave) as the waveform of the AC voltage.

1.2 Operation of Control Circuit of DC Power-Supply Device

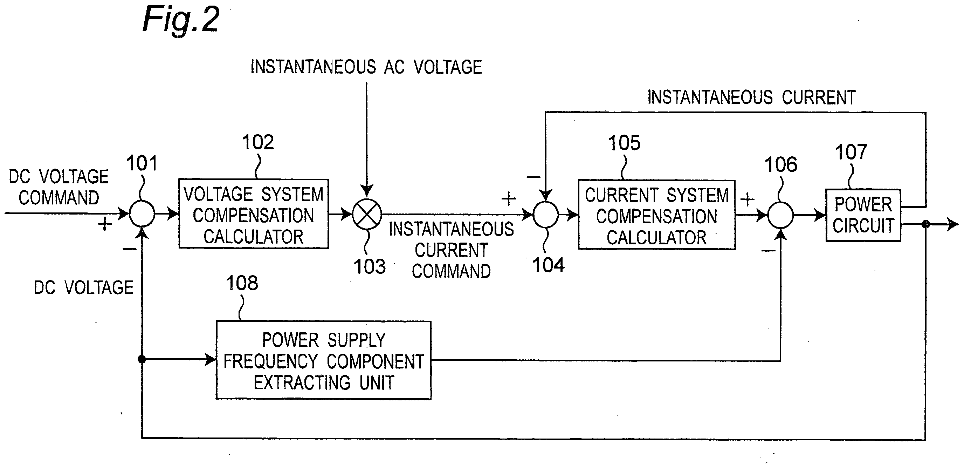

Fig. 2 shows a block diagram representing an information process by the control circuit 8 of the present invention. In Fig. 2, a power circuit 107 is a circuit that converts an AC voltage into a DC voltage, and corresponds to the reactor 2, the switching elements 302 and 312, the diodes 303, 304, 313, and 314, and the capacitor 4 in Fig. 1. In Fig. 2, the constituents other than the power circuit 107 (a conparator 101, a voltage system compensation calculator unit 102, a multiplier circuit 103, a comparator 104, a current system compensation calculator unit 105, a corrector unit 106, and a power supply frequency component extracting unit 108) represent an internal configuration of the control circuit 8 shown in Fig. 1.

The comparator 101 compares a DC voltage command externally received with an actual DC voltage (the output of the DC voltage detector 6 shown in Fig. 1) obtained from the power circuit 107. The voltage system compensation calculator unit 102 compensates for the comparison result (i.e., a voltage deviation) of the comparator 101. The voltage system compensation calculator unit 102 is provided such that the voltage control system operates stably and highly-precisely. The multiplier circuit 103 multiplies a value represented by instantaneous AC voltage information (information on the AC voltage detected by the AC voltage waveform detector 7 shown in Fig. 1) and a value represented by information based on the voltage deviation output from the voltage system compensation calculator unit 102, and outputs the multiplication result as an instantaneous current command. The multiplier circuit 103 modulates the instantaneous AC voltage waveform by the information based on the voltage deviation, whereby the instantaneous current command assuming the same waveform as the instantaneous AC voltage waveform is obtained.

The comparator 104 compares the instantaneous current command output from the multiplier circuit 103 with the instantaneous current information (information on the current detected by the current detector 3 shown in Fig. 1) obtained from the power circuit 107, and outputs the comparison result as a current deviation. The current system compensation calculator unit 105 compensates for the current deviation output from the comparator 104 and outputs it as a drive signal.

The power circuit 107 is driven by the drive signal output from the current system compensation calculator unit 105 through the corrector unit 106. That is, the switching elements 302 and 312 shown in Fig. 1 switch on/off operations in accordance with the drive signal. By allowing the power circuit 107 to be driven, an instantaneous current and a DC voltage are obtained. By sending the instantaneous current (information on the current detected by the current detector 3 shown in Fig. 1) to the comparator 104, and sending the DC voltage (information on the DC voltage detected by the DC voltage detector 6 shown in Fig. 1) to the comparator 101, a feedback control loop is structured.

The power supply frequency component extracting unit 108 receives the information on the DC voltage obtained by driving the power circuit 107, and extracts a power supply frequency component contained in the DC voltage. Based on the extracted information on the amplitude of the power supply frequency component, the corrector unit 106 corrects the drive signal output from the current system compensation calculator unit 105. In the present embodiment, the power supply frequency component extracting unit 108 allows the DC voltage (i.e., the DC voltage smoothed by the smoothing capacitor 4) output from the power circuit 107 to pass through the filter that passes the power supply frequency component, to thereby extract the power supply frequency component contained in the DC voltage. The corrector unit 106 superimposes a DC component which is in an opposite direction on the drive signal to the power circuit 107 so as to cancel out the extracted power supply frequency component. Thus, based on the extracted power supply frequency component, the ratio of on/off operation of the switching elements 302 and 312 is corrected.

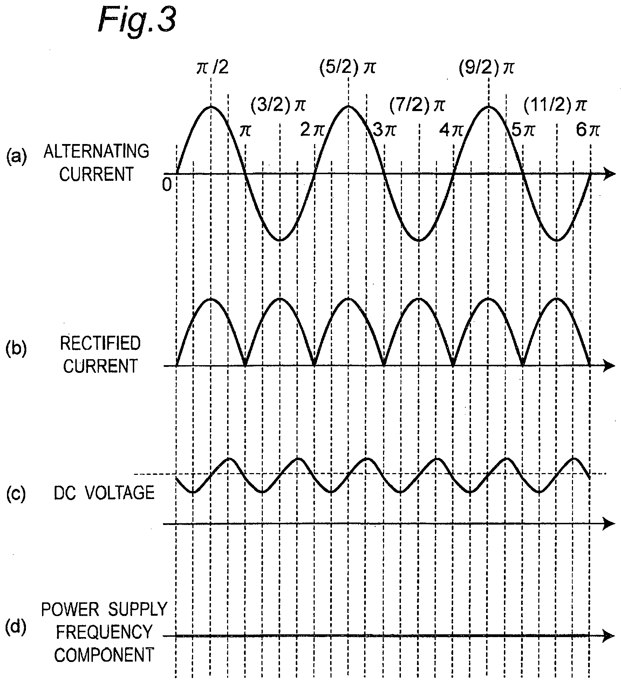

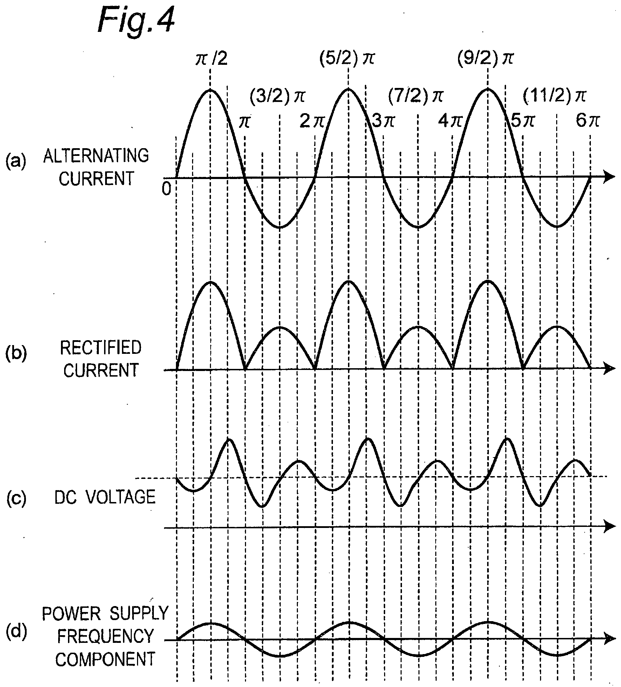

The control principle represented by the block diagram of Fig. 2 will be described with reference to the waveform diagrams of Figs. 3 and 4. Fig. 3 shows a waveform where a DC component from the AC power supply 1 is absent. On the other hand, Fig. 4 shows a waveform where a DC component from the AC power supply 1 is contained.

When there is no DC component, as shown in Fig. 3 (a), an alternating current output from the AC power supply 1 becomes symmetrical in positive and negative directions. When the alternating current is rectified, as shown in Fig. 3 (b), it becomes a pulsating current waveform having components twice as great as the frequency of the AC power supply 1. When the current becoming the pulsating current waveform is smoothed by the smoothing capacitor 4, as shown in Fig. 3 (c), the DC voltage waveform having components twice as great as the frequency of the AC power supply 1 is obtained. Allowing the DC voltage waveform to pass through the filter that passes a power supply frequency component, what is obtained as a result (i.e., the power supply frequency component extracted by the power supply frequency component extracting unit 108) is the waveform shown in Fig. 3 (d). As shown in Fig. 3 (d), when the AC power supply does not contain a DC component, the power supply frequency component extracting unit 108 does not extract the component of the frequency which is the same as the power supply frequency. When no DC component is contained in the AC power supply, the converted DC voltage waveform does not contain the frequency component which is the same as the power supply frequency. Hence, any problem such as a loss increase in the AC power system attributed to the DC component will not occur.

On the other hand, when the alternating current contains the DC component, as shown in Fig. 4 (a), the alternating current output from the AC power supply 1 has a waveform which is different in amplitude between the positive direction and the negative direction. When this alternating current is rectified, as shown in Fig. 4 (b), it becomes a pulsating current waveform, amplitude of which alternately changes. Further, when the pulsating current is smoothed by the smoothing capacitor 4, as shown in Fig. 4 (c), it becomes a waveform in which undulations having the same frequency component as the power supply frequency appear. Further, allowing the waveform to pass through a filter that passes the power supply frequency component, what is obtained as a result (i.e., the power supply frequency component extracted by the power supply frequency component extracting unit 108) is the waveform shown in Fig. 4 (d). As shown in Fig. 4 (d), from the waveform extracted by the power supply frequency component extracting unit 108, information having the power supply frequency component is obtained. Thus, when the alternating current from the AC power supply 1 contains a DC component, the converted DC voltage waveform also contains the same frequency component as the power supply frequency. Hence, a problem such as a loss increase in the AC power system attributed to the DC component will occur.

As has been described, when an alternating current contains a DC component, a DC voltage contains the undulation of the power supply frequency component. Based on such a phenomenon, in the present embodiment, the control circuit 8 extracts the power supply.frequency component of a DC voltage to be output, and corrects on/off operations of the switching elements 302 and 312 such that the undulation of the power supply frequency component decreases. For example, the power supply frequency component shown in Fig. 4 (d) is positive in the interval where the phase ranges from 0 to $\pi$. That is, it can be seen that the current increases when the AC voltage is in the positive direction. Hence, the on-ratio of the switching elements 302 and 312 at the time when the AC voltage is in the positive phase is decreased. On the other hand, the power supply frequency component shown in Fig. 4 (d) is negative in the interval where the phase ranges from $\pi$ to $2\pi$. Hence, it can be seen that the current decreases when the AC voltage is in the negative direction. Hence, the on-ratio of the switching elements 302 and 312 at the time when the AC voltage is in the negative phase is increased. Thus, the amplitude of the output of the power supply frequency component extracting unit 108 is substantially proportional to the DC component contained in the current output from the AC power supply 1. Accordingly, in order to cancel out the DC component, the corrector unit 106 superimposes a DC component in the opposite direction on the drive signal.

1.3 Conclusion

According to the present embodiment, the control circuit 8 includes: the power supply frequency component extracting unit 108 that extracts a DC component contained in a current output from the AC power supply 1 based on a DC voltage output from the power circuit 107; and the corrector unit 106 that superimposes a DC component in the opposite direction on the drive signal of the power circuit 107 so as to cancel out the extracted DC component. Thus, in a case where a DC component is included in the alternating current output from the AC power supply, the DC component thereof can be removed from the drive signal. Specifically, in a case where the DC component is mixed in the current or electric power from the AC power supply 1, the electric power that flows in is different between the positive phase and the negative phase, and the component of the power supply frequency appears in the smoothed DC voltage. By extracting the power supply frequency component contained in the DC voltage by the power supply frequency component extracting unit 108, and correcting the on-off ratio of the switching elements 302 and 312 at each time point in accordance with the extracted phase and the amplitude, the DC component from the AC power supply 1 can be removed without the necessity of detecting the DC component. Hence, occurrence of an abnormality such as a loss increase in the AC power system can be prevented. Further, any overload to the electric power system can be alleviated. Still further, it becomes possible to cause the current waveform to further approximate a sinusoidal wave. According to the present embodiment, since the instantaneous current further approximates a sinusoidal wave, the power factor being the use efficiency of the AC power supply can further be improved. According to the configuration of the present embodiment, it becomes possible to implement a feedback control system for removing a DC component in a power supply current without directly detecting the DC component in the power supply current. That is, since the AC transformer can be used to remove the DC component in the power supply current, a cost-effective DC power-supply device can be implemented.

According to the present embodiment, since the DC component in the AC electric power from the AC power supply is detected, it is applicable to a case even where the voltage waveform is distorted. That is, it becomes possible to remove a DC component flowing from the AC power supply, without being affected by the distortion of the AC power supply voltage. Thus, according to the present embodiment, the inflowing DC component can be removed with a simple configuration, to thereby realize a high power factor.

1.4 Variation

It is to be noted that, in the present embodiment, in order to cancel out the DC component, the corrector unit 106 superimposes a DC component in the opposite direction on the drive signal based on the information on the amplitude of the extracted power supply frequency component. However, the corrector unit 106 may refer to a certain value, and may correct the drive signal by adding or subtracting a value proportional to a voltage error and a power supply frequency component to or from the certain value. That is, it is also possible to generate a correction pattern in which a certain value is referred to and a value proportional to the voltage error and the power supply frequency component is added to or subtracted from the certain value. Further, the corrector unit 106 may set, as the drive signal, the information on the drive signal of the power circuit 107 that is determined by the DC voltage command and the instantaneous voltage of the AC voltage, and that increases or decreases in accordance with the voltage error and the power supply frequency component. That is, the correction pattern may be generated such that the value increases or decreases in accordance with the voltage error and the power supply frequency component.

In the latter case, the corrector unit 106 sets the on-ratio of the switching elements 302 and 312, which is the drive signal of the power circuit 107, by the following relational expression (function pattern).

$$\text{"on-ratio"} = 1 - \text{"an absolute value of an instantaneous value of an AC voltage"} / \text{"a DC voltage command"}$$

Further, in the present embodiment, the power supply frequency component extracting unit 108 uses the filter that passes the power supply frequency component to extract the power supply frequency component contained in the DC voltage. However, the method of extracting the power supply frequency component is not limited to the present embodiment. Other method can be applied so long as it is a technique with which the magnitude (amplitude) and the polarity of the power supply frequency component can be known. For example, the power supply frequency component extracting unit 108 may successively receive the DC voltage values at the phases of $(3/4)\,\pi$, $(7/4)\,\pi$, $(11/4)\,\pi$, $(15/4)\,\pi$... of the AC power supply 1, and may obtain the difference between the alternately received values, to thereby extract the power supply frequency component. Further, the power supply frequency component extracting unit 108 may successively receive the DC voltage values at the phases of $(1/4)\,\pi$, $(5/4)\,\pi$, $(9/4)\,\pi$, $(13/4)\,\pi$... of the AC power supply 1, and may obtain the difference between the alternately received values, to thereby extract the power supply frequency component.

It is to be noted that, in the present embodiment, the control circuit 8 having the internal configuration shown in Fig. 2 is to be applied to the DC power-supply device having the circuit configuration shown in Fig. 1. However, the configuration of the DC power-supply device to which the control circuit 8 is applicable is not limited to that shown in Fig. 1. For example, the control circuit 8 in the present embodiment can be applied to the DC power-supply devices having the circuit configurations respectively shown in Figs. 5, 7, and 8.

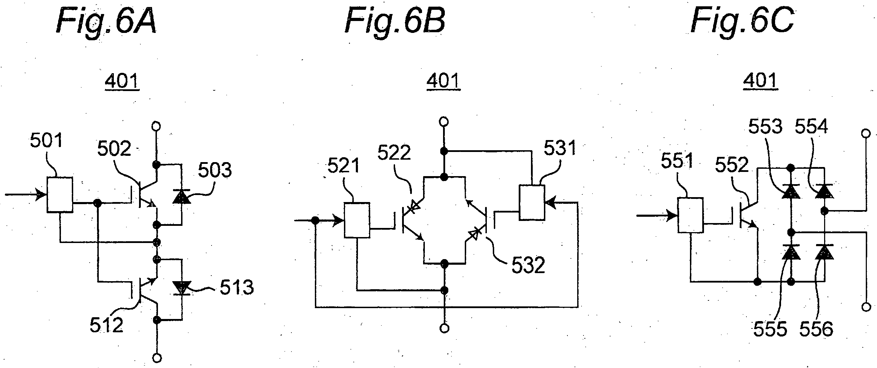

Fig. 5 shows another circuit configuration of the DC power-supply device. In Fig. 5, constituents identical to those in Fig. 1 are denoted by the identical reference characters, and a detailed description thereof is omitted. The DC power-supply device shown in Fig. 5 has a configuration in which an AC power supply 1 is short-circuited by a reactor 2 and a bidirectional switch 401. The specific configuration of the bidirectional switch 401 is shown in Fig. 6A to Fig. 6C. As the bidirectional switch 401, what can be used are: a butt configuration with IGBTs 502 and 512 having anti-parallel diodes 503 and 513 as shown in Fig. 6A; an anti-parallel connection configuration with reverse blocking IGBTs 522 and 532 as shown in Fig. 6B; a configuration in which the polarity is one-sided by four diodes 553, 554, 555, and 556 and short-circuit is established by an IGBT 552 as shown in Fig. 6C, and the like. In Fig. 6A to Fig. 6C, gate drive circuits 501, 521, 531, and 551 are connected to the switching elements. With such a power-supply device, provision of the control circuit 8 shown in Fig. 2 achieves the effect identical to that of the first embodiment. That is, the DC component flowing from the AC power supply can be removed, and the power factor from the AC power supply 1 can be improved. Further, as compared to the configuration of Fig. 1, the configuration of the Fig. 5 has an equivalent passage loss when the circuit shown in Fig. 6A is employed as the bidirectional switch 401; whereas it can achieve a reduction in the pass-band loss when the circuit shown in Fig. 6B is employed. Further, since the circuits respectively shown in Fig. 6A, Fig. 6B, and Fig. 6C each require only one drive signal for turning on/off the bidirectional switch 401, it is not necessary to take into consideration of the short-circuiting on the direct current side.

Fig. 7 shows still another configuration of the DC power-supply device. In Fig. 7, constituents identical to those in Fig. 1 are denoted by the identical reference characters, and a detailed description thereof is omitted. In the DC power-supply device shown in Fig. 7, the AC voltage output from an AC power supply 1 is rectified by diodes 605, 606, 615, and 616, and short-circuited by a switching element 603. To the switching element 603, the gate drive circuit 602 is connected. With such a power-supply device also, provision of the control circuit 8 shown in Fig. 2 achieves the effect identical to that of the first embodiment. Further, since the drive signal for turning on/off the switching element 603 can be realized one in number, it is not necessary to take into consideration of the short-circuiting on the direct current side. Further, the circuit configuration of Fig. 7 is advantageous in that the information on the AC voltage can be detected by a detector 601 on the direct current side, and the detector circuit and the drive control circuit can be simplified.

Fig. 8 shows still another configuration of the DC power-supply device. In Fig. 8, constituents identical to those in Fig. 1 are denoted by the identical reference characters, and a detailed description thereof is omitted. The DC power-supply device shown in Fig. 8 is provided with switching elements 702 and 712 in parallel on the bottom side relative to full-wave rectifier circuits 704 and 714. To the switching elements 702 and 712, gate drive circuits 701 and 711 are connected, respectively. In the DC power-supply device, an AC power supply 1 is short-circuited by switching elements 702 and 712 and diodes 703 and 713 through reactors 2a and 2b. With such a power-supply device also, provision of the control circuit 8 shown in Fig. 2 achieves the effect identical to that of the first embodiment. With the circuit configuration shown in Fig. 8 also, since the drive signal for turning on/off the switching elements 702 and 712 can be realized one in number, it is not necessary to take into consideration of the short-circuiting on the direct current side. Further, with the circuit configuration of Fig. 8, the pass-band loss becomes equivalent to that of Fig. 1.

As described above, the control circuit 8 according to the present embodiment is applicable to various DC power-supply devices shown in Figs. 1, 5, 7, and 8, irrespective of the number and configuration of the switching elements and the drive signals.

It is to be noted that, while the IGBTs are used as switching elements in Figs. 1, 5, 7, and 8, other elements such as MOSFETs can be used.

It is to be noted that, while the DC power-supply device according to the first embodiment of the present invention employs an AC transformer as the current detector 3, a sensor capable of detecting a direct current may be employed. In a case where such a sensor capable of detecting a direct current is employed, an offset may occur in the output due to the temperature characteristic or the like, and the value of the output when the current of the sensor corresponds to zero may deviate. However, in this case als, a similar component appears in the DC voltage output. Therefore, the offset of the sensor can equivalently be solved by applying the technique of the present invention.

Further, in the first embodiment of the present invention, it has been described that the control circuit 8 is applicable to the DC power-supply device that can detect an instantaneous AC voltage or voltage phase. However, the control circuit 8 of the present embodiment is not limited to such a DC power-supply device, and it can be installed in a DC power-supply device that uses estimated information being an estimation of an instantaneous AC voltage or phase. A method of estimating an instantaneous AC voltage or phase is proposed in, e.g., the prior technique (JP 2001-45763 A) which includes an inventor common to the present application.

It is to be noted that, in the present embodiment, the description has been given in relation to a single-phase power supply. However, the present embodiment is applicable also to a three-phase power supply (the same holds true for the following second to fourth embodiments). That is, by extracting the amplitude and the phase of the power supply frequency component of the three-phase power supply to correct the drive operation of the corresponding switching element, the effect identical to the present embodiment is achieved.

(Second Embodiment)

A DC power-supply device according to a second embodiment of the present invention corrects information on the detected instantaneous current by a characteristic that is opposite to the frequency characteristic of a current detector 3 (an AC transformer in the present embodiment), to thereby make it possible to further improve the current waveform than that achieved in the first embodiment. The DC power-supply device according to the present embodiment is different from that according to the first embodiment in the internal configuration of the control circuit 8. Other than that, the DC power-supply device of the present embodiment is identical to that according to the first embodiment. That is, the DC power-supply device of the present embodiment has a circuit configuration such as shown in Fig. 1, 5, 7, or 8.

2.1 Structure of Control Circuit

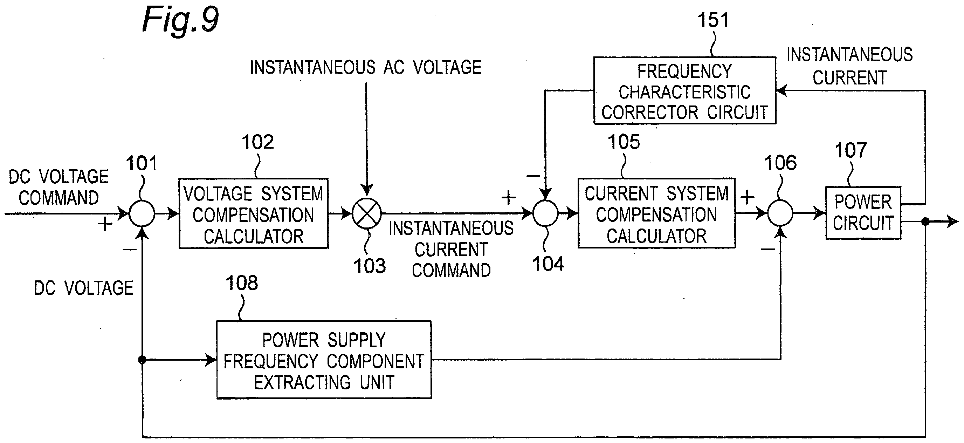

Fig. 9 shows a block diagram of a control circuit 8 according to the present embodiment. The control circuit 8 of the present embodiment further includes, in addition to the configuration of the first embodiment shown in Fig. 2, a frequency characteristic corrector circuit 151 that corrects the frequency characteristic of the current detector 3 (an AC transformer in the present embodiment) at the instantaneous current, such that an instantaneous current, which is obtained as a result of allowing the power circuit 107 to be driven, is output to the comparator 104 through the frequency characteristic corrector circuit 151. Other than that, the configuration is identical between Fig. 9 and Fig. 2.

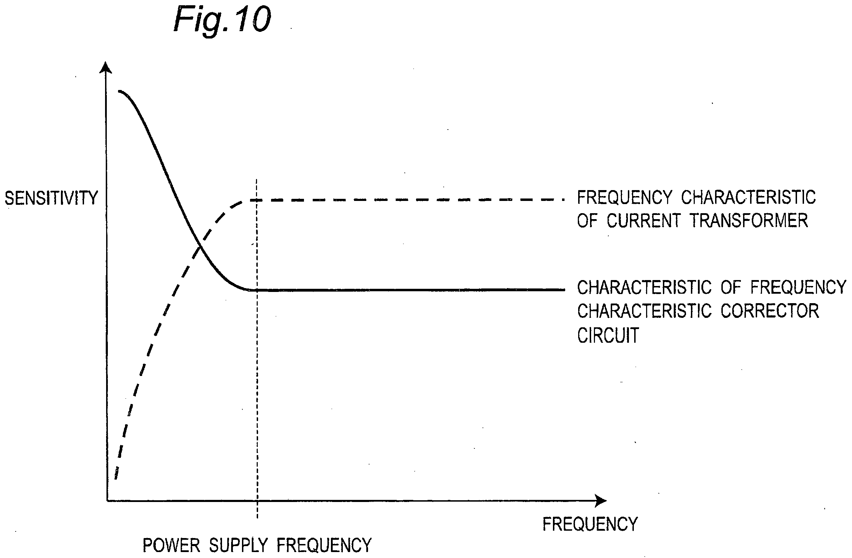

Fig. 10 shows the characteristic of the frequency characteristic corrector circuit 151 and the characteristic of the AC transformer being the current detector 3. As shown in Fig. 10, the characteristic of the frequency characteristic corrector circuit 151 is substantially opposite to the frequency characteristic of the AC transformer. By the frequency characteristic corrector circuit 151, the frequency characteristic of the AC transformer is corrected, and the instantaneous current output to the comparator 104 has a waveform not containing the frequency characteristic of the AC transformer. As shown in Fig. 10, while a general current transformer has enough sensitivity in a frequency range equal to or higher than the power supply frequency, the sensitivity thereof decreases in a frequency range equal to or lower than the power supply frequency. In particular, the sensitivity begins to decrease around the frequency half as high as the power supply frequency. Accordingly, in the first embodiment, the information volume between the power supply frequency and direct current decreases. Accordingly, the feedback control using the AC transformer cannot improve the precision of the sinusoidal, wave waveform of an alternating current. On the other hand, according to the second embodiment, since the frequency characteristic of the AC transformer 3 is corrected by the frequency characteristic corrector circuit 151, the precision of the sinusoidal wave waveform can further be improved.

2.2 Variation 1

It is to be noted that, the DC power-supply device including the control circuit 8 according to each of the first and second embodiments shown in Figs. 2 and 9, respectively, may employ the following configuration such that a further instantaneous excessive current can be detected. Specifically, when the absolute value of the instantaneous value represented by the current information obtained from the current detector (AC transformer) 3 or the corrected current information obtained from the frequency characteristic corrector circuit 151 exceeds a first prescribed level, the control circuit 8 pauses the switching elements (e.g., the switching elements 302 and 312 shown in Fig. 1, the switching element 401 shown in Fig. 5, the switching element 603 shown in Fig. 7, and the switching elements 702 and 712 shown in Fig. 8) from being turned on/off for a prescribed period of time. By pausing on/off of the switching elements, short-circuiting of the AC power supply 1 and the reactor 2 by the switching element is not established. Thus, an increase in the current can be prevented.

Further, when the absolute value of the instantaneous value represented by the current information obtained from the current detector (AC transformer) 3 or the corrected current information obtained from the frequency characteristic corrector circuit 151 exceeds a second prescribed level greater than the first prescribed level, the control circuit 8 stops the switching elements (e.g., the switching elements 302 and 312 shown in Fig. 1, the switching element 401 shown in Fig. 5, the switching element 603 shown in Fig. 7, and the switching elements 702 and 712 shown in Fig. 8) from being turned on/off. Thus, in a case where a current does not drastically decrease despite the current that exceeds the first prescribed level being detected, by stopping the operation of the device, damage of the device or the like can be prevented. Further, since the overload state of the switching element can be realized without using another detector, it becomes possible to simplify the DC power-supply device.

2.3 Variation 2

The DC power-supply device including the control circuit 8 shown in Fig. 2 or 9 may detect, when a DC load is driven, whether or not the load is excessively great by using current information detected by an AC transformer being the current detector 3. Specifically, the control circuit 8 checks whether or not a value obtained by averaging, over a period equal to or greater than a power supply cycle, the amplitude of the current value represented by the current information obtained from the current detector (the AC transformer) 3 or by the corrected current information obtained from the frequency characteristic corrector circuit 151 is greater than a prescribed level (a third prescribed level), to thereby determine whether or not the load is excessively great. When the DC voltage supplied to the load is too high, the load tends to become excessively great. Accordingly, by reducing the DC voltage based on the determination result, the overload condition can be solved on the load side. Thus, the power-supply device can operate without having the power supply failed by an overload state, and without having the power supply shut down due to an overload situation on the AC power supply side. Therefore, damage to the power-supply device itself, or damage to the system connected thereto as a load can be prevented. Further, since an AC transformer that is used for controlling the power supply current to have a sinusoidal wave can be employed as it is, an increase in the number of components or an increase in the size of the device will not be invited.

(Third Embodiment)

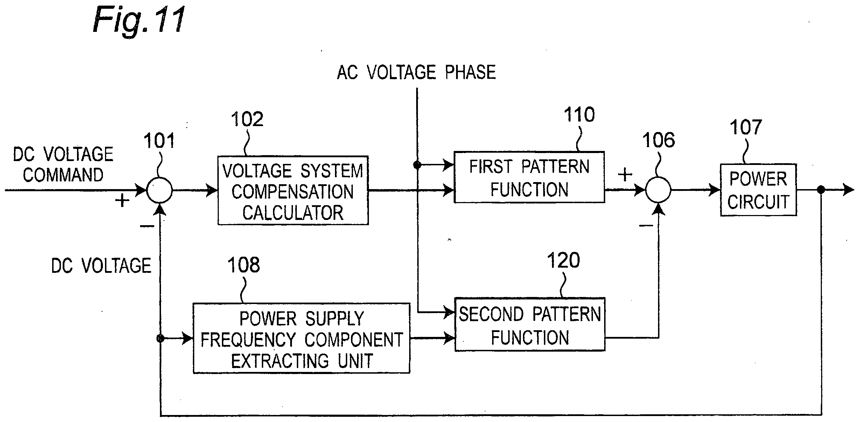

Next, based on the principle of the present invention, a description will be given of a DC power-supply device of a further simplified configuration. Though the DC power-supply device according to the present embodiment has a circuit configuration such as shown in Fig. 1, 5, 7, or 8, it does not include the current detector unit 3. Further, the DC power-supply device according to the present embodiment is different in the internal configuration of the control circuit 8 from the first and second embodiments. Fig. 11 shows a block diagram of the control circuit 8 according to the present embodiment. In Fig. 11, a power circuit 107 corresponds to, for example, the reactor 2, the switching elements 302 and 312, the diodes 303, 304, 313, and 314, and the capacitor 4 shown in Fig. 1. In Fig. 11, the constituents (a comparator 101, a voltage system compensation calculator unit 102, first and second pattern function units 110 and 120, a corrector unit 106, and a power supply frequency component extracting unit 108) other than the power circuit 107 represent the internal configuration of the control circuit 8. As compared to the control circuit shown in Fig. 2, the control circuit 8 according to the present embodiment shown in Fig. 11 has a simpler configuration in which a control function for measuring an instantaneous current waveform and turning it into a sinusoidal wave current of high precision is omitted.

As shown in Fig. 11, the comparator 101 compares an externally received DC voltage command with an actual DC voltage obtained from the power circuit 107, and outputs a comparison result (i.e., a voltage deviation). The voltage system compensation calculator unit 102 compensates for the voltage deviation. The voltage system compensation calculator unit 102 is provided such that the voltage control system operates stably and highly-precisely.

The first pattern function unit 110 generates a drive signal based on the AC voltage phase at that time and the information on the compensated voltage deviation output from the voltage system compensation calculator unit 102. The drive signal output from the first pattern function unit 110 is sent to the power circuit 107 through the corrector unit 106.

The power supply frequency component extracting unit 108 receives information on the DC voltage obtained by the power circuit 107 being driven, and extracts the power supply frequency component contained in the DC voltage. The second pattern function unit 120 generates correction information on the drive signal based on the phase of the AC voltage at that time (or the AC voltage phase at that time and information on the compensated voltage deviation) and the power supply frequency component extracted by the power supply frequency component extracting unit 108. Thus, the power supply frequency component extracted by the power supply frequency component extracting unit 108 is sent to the corrector unit 106 through the second pattern function unit 120. The corrector unit 106 corrects the drive signal output from the first pattern function unit 110 based on the information obtained from the second pattern function unit 120, and outputs it to the power circuit 107. In other words, the control circuit 8 extracts the AC power supply frequency component contained in the DC voltage to be output, and corrects the on-off ratio of the switching elements to be turned on/off, in accordance with the extracted AC power supply frequency component, and a signal having a predetermined basic pattern or a basic pattern based on an AC voltage waveform modulated according to a deviation between the DC voltage and the targeted DC voltage.

In the present embodiment, the principle of detecting the DC component from the AC power supply 1 is identical to the first or second embodiment described above. It is to be noted that, in the present embodiment, the current detector unit 3 shown in Fig. 1 is not included. That is, the drive signal is not generated based on the information on the instantaneous current detected by the power circuit 107. However, the corrector unit 106 correcting the drive signal with a polarity opposite to the DC component can realize the effect which is similar to that achieved when the current detector unit 3 is included. Further, as the correction pattern for the drive signal, for example, the function pattern as described in the first embodiment can be used.

Thus, it becomes possible to remove the DC component from the AC power supply without the necessity of using the current detector unit 3 on the AC side.

(Fourth Embodiment)

In connection with the foregoing embodiments, the description has been given of each case where the DC power-supply device includes the control circuit 8. However, the control circuit 8 according to each of the foregoing embodiments may be included in an application system using a power-supply device. For example, the control circuit 8 shown in Figs. 2 and 9 can be applied to an application system (e.g., a motor drive device) that drives an AC motor through an inverter.

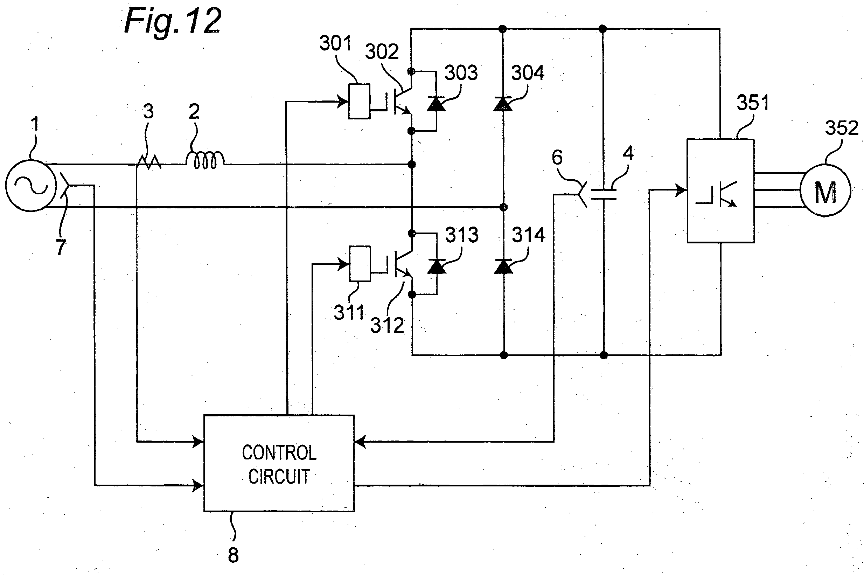

Fig. 12 shows an overall circuit configuration of an application system using a DC power-supply device according to the present embodiment. The application system according to the present embodiment includes, in addition to the DC power-supply device shown in Fig. 1, an inverter circuit 351 and an AC motor 352 connected to the inverter circuit 351, and drives a power load (not shown) connected to the AC motor 352.

In some general power loads, the load torque increases in accordance with an increase in the rotation speed, while the other general power loads have substantially a constant torque irrespective of an increase in the rotation speed. In the former case, the load power drastically increases in accordance with an increase in the rotation speed. In the latter case, the load power increases proportional to an increase in the rotation speed. In both the former and the latter cases, in order to solve the situation involved with an excessive power load due to any change in the environment or an abnormality or the like, the rotation speed of the AC motor 352 needs to be decreased.

In the application system shown in Fig. 12, similarly to Variation 2 of the second embodiment, by checking whether or not the detection value (the amplitude component of the current value represented by the current information) of the AC transformer being averaged over a period equal to or greater than the power supply cycle is greater than a prescribed level (a fourth prescribed level), whether or not the power load is excessively great can be determined. When it is sensed that the power load is excessively great, a reduction in the rotation speed of the AC motor 352 allows the load to solve such an overload situation. This makes it possible to prevent an occurrence of any damage to the power-supply device and the application system, and to the inverter circuit 351 and the AC motor 352 being the load.

In the present embodiment, since the current detector 3 that is used in the application system for controlling the power supply current to be turned into a sinusoidal wave can be employed as it is, an increase in the number of components or an increase in the size of the device will not be invited.

It is to be noted that, in a case where a DC motor can be used as a motor in driving the power load, the inverter circuit is not necessary. However, in this case also, as has been described in Variation 2 of the second embodiment, when an excessively great load state is entered, the rotation speed of the motor can be decreased by reducing the DC voltage.

It is to be noted that, in determining whether or not the load is excessively great in the above-described embodiments, the current information detected by the AC transformer is used, and the value obtained by averaging the amplitude of the current value represented by the current information over a period equal to or greater than the power supply cycle is used. However, the present invention is not limited thereto, and a method of using an effective value of an alternating current represented by the current information, or a method of using a peak value of an amplitude of the current value represented by the current information in a period equal to or greater than the power supply cycle can be used.

It is to be noted that, in the foregoing embodiment, the motor drive device shown in Fig. 12 is exemplarily shown as the application system. However, the application system is only required to drive a motor using the power-supply device. For example, the application system may be an air conditioner that includes a compressor and that supplies electric power to the compressor.

Industrial Applicability

According to the present invention, by extracting a power supply frequency component contained in a DC voltage, and correcting the on-off ratio of switching elements based on the extracted power supply frequency component, it becomes possible to remove the DC component flowing from an AC power supply, to thereby decrease the overload to the electric power system. Hence, the present invention is suitable for a DC power-supply device and an application system (e.g., an inverter air conditioner) that takes a load of a substantially direct current from an AC power supply and that is great in electric power consumption.

Reference Signs List

| | |
|---|---|
| 1 | AC power supply |
| 2 | reactor |
| 3 | current detector |
| 4 | capacitor |
| 5 | load |
| 6 | DC voltage detector |
| 7 | AC voltage waveform detector |
| 8 | control circuit |
| 101, 104 | comparator |
| 102 | voltage system compensation calculator unit |
| 103 | multiplier circuit |
| 105 | current system compensation calculator unit |
| 106 | corrector unit |
| 107 | power circuit |
| 108 | power supply frequency component extracting unit |
| 110 | first pattern function unit |

| 120 | second pattern function unit |
|---|---|
| 151 | frequency characteristic corrector circuit |
| 301, 311 | gate drive circuit |
| 302, 312 | switching element |
| 303, 304, 313, 314 | diode |
| 351 | inverter circuit |
| 352 | AC motor |
| 401 | bidirectional switch |
| 603, 702, 712 | switching element |

**Claims**

1. A DC power-supply device for converting an AC voltage into a DC voltage to output the converted DC voltage, comprising:

   a switching element (312) configured to short-circuit an AC power supply through a reactor;
   a current detector (3) unit configured to detect a current flowing from the AC power supply and output the detected AC current as current information; and
   a control unit (8) configured to turn the switching element on and off such that a waveform of a current represented by the current information detected by the current detector unit becomes a substantially sinusoidal wave, wherein the control unit removes a DC component from the AC power supply without detecting the DC component from the AC power supply by extracting an undulation of a frequency component which is the same as an AC power supply frequency and is contained in the DC voltage to be output, superimposing a DC component which is in an opposite direction to the extracted frequency component, and correcting an on-off ratio of the switching element to be turned on and off such that the extracted undulation of the frequency component which is the same as the AC power supply frequency is cancelled out.

2. The DC power-supply device according to claim 1, wherein

   the current detector unit is an AC transformer.

3. The DC power-supply device according to claim 2, wherein

   the control unit includes a frequency characteristic corrector unit configured to correct the current information detected by the AC transformer using a frequency characteristic of the AC transformer, and
   the control unit turns the switching element on and off such that a waveform of a current represented by the current information corrected by the frequency characteristic corrector unit becomes a substantially sinusoidal wave.

4. The DC power-supply device according to any one of claims 1 to 3, wherein

   the control unit pauses the switching element from being turned on and off when an absolute value of an instantaneous value represented by the current information detected by the current detector unit or the current information corrected by the frequency characteristic corrector unit exceeds a first prescribed level.

5. The DC power-supply device according to any one of claims 1 to 4, wherein

   the control unit stops the switching element from being turned on and off when the absolute value of the instantaneous value represented by the current information detected by the current detector unit or the current information corrected by the frequency characteristic corrector unit exceeds a second prescribed level greater than the first prescribed level.

6. The DC power-supply device according to any one of claims 1 to 5, wherein

   the control unit averages an amplitude component of a current value represented by the current information detected by the current detector unit or the current information corrected by the frequency characteristic corrector unit over a period equal to or more than a cycle of the AC power supply, and when the averaged value is greater than a third prescribed level, the control unit decreases the DC voltage to be output.

7. An application system, comprising:

a DC power-supply device according to any one of claims 1 to 6; and
a motor driven by an output of the DC power-supply device, wherein
an amplitude component of a current value represented by current information detected by a current detector unit of the DC power-supply device is averaged over a period equal to or more than a cycle of an AC power supply, and when the averaged value is greater than a fourth prescribed level, a rotation speed of the motor is decreased.

8. A DC power-supply device for converting an AC voltage into a DC voltage to output the converted DC vottage, comprising:

a switching element (312) configured to short-circuit an AC power supply through a reactor; and
a control unit (8) configured to turn the switching element on and off such that a current flowing from the AC power supply has a substantially sinusoidal wave, wherein
the control unit removes a DC component from the AC power supply without detecting the DC component from the AC power supply by extracting an undulation of a frequency component which is the same as an AC power supply frequency and is contained in a DC voltage to be output, and correcting an on-off ratio of the switching element to be turned on and off in accordance with the extracted undulation of the frequency component which is the same as the AC power supply frequency and a signal obtained by modulating a predetermined basic pattern or a basic pattern based on an AC voltage waveform in accordance with a deviation between the DG voltage and a targeted DC voltage, such that the extracted undulation of the frequency component which is the same as the AC power supply frequency is cancelled out.

**Patentansprüche**

1. Gleichspannungsnetzteilvorrichtung zum Umwandeln einer Wechselspannung in eine Gleichspannung, um die umgewandelte Gleichspannung auszugeben, umfassend:

ein Schaltelement (312), ausgelegt, eine Wechselstromversorgung durch eine Drossel kurzzuschließen;
eine Stromerfassungseinheit (3), ausgelegt, einen von der Wechselstromversorgung fließenden Strom zu erfassen und den erfassten Wechselstrom als Strominformation auszugeben; und
eine Steuereinheit (8), ausgelegt, das Schaltelement ein- und auszuschalten, sodass eine Wellenform eines Stroms, der durch die Strominformation dargestellt ist, die durch die Stromerfassungseinheit erfasst ist, zu einer im Wesentlichen sinusförmigen Welle wird, wobei
die Steuereinheit eine Gleichkomponente von der Wechselstromversorgung ohne ein Erfassen der Gleichkomponente von der Wechselstromversorgung entfernt durch ein Extrahieren einer Welligkeit einer Frequenzkomponente, die dieselbe ist wie eine Wechselstromversorgungsfrequenz und in der auszugebenden Gleichspannung enthalten ist, ein Überlagern einer Gleichkomponente, die in einer entgegengesetzten Richtung liegt, zur extrahierten Frequenzkomponente, und ein Korrigieren eines Ein-/Ausschaltverhältnisses des ein- und auszuschaltenden Schaltelements derart, dass die extrahierte Welligkeit der Frequenzkomponente, die dieselbe ist wie die Wechselstromversorgungsfrequenz, aufgehoben wird.

2. Gleichspannungsnetzteilvorrichtung nach Anspruch 1, wobei
die Stromerfassungseinheit ein Wechselstromtransformator ist.

3. Gleichspannungsnetzteilvorrichtung nach Anspruch 2, wobei
die Steuereinheit eine Frequenzkennlinienkorrektureinheit enthält, ausgelegt, die durch den Wechselstromtransformator erfasste Strominformation unter Verwendung einer Frequenzkennlinie des Wechselstromtransformators zu korrigieren, und
die Steuereinheit das Schaltelement so ein- und ausschaltet, dass eine Wellenform eines Stroms, der durch die Strominformation dargestellt ist, die durch die Frequenzkennlinienkorrektureinheit korrigiert ist, zu einer im Wesentlichen sinusförmigen Welle wird.

4. Gleichspannungsnetzteilvorrichtung nach einem der Ansprüche 1 bis 3, wobei

die Steuereinheit das Ein- und Ausschalten des Schaltelements aussetzt, wenn ein Absolutwert eines Momentanwerts, der durch die Strominformation, die durch die Stromerfassungseinheit erfasst ist, oder durch die Strominformation dargestellt ist, die durch die Frequenzkennlinienkorrektureinheit korrigiert ist, einen ersten vorgeschriebenen Pegel überschreitet.

5.  Gleichspannungsnetzteilvorrichtung nach einem der Ansprüche 1 bis 4, wobei
    die Steuereinheit das Ein- und Ausschalten des Schaltelements beendet, wenn der Absolutwert des Momentanwerts, der durch die Strominformation, die durch die Stromerfassungseinheit erfasst ist, oder durch die Strominformation dargestellt ist, die durch die Frequenzkennlinienkorrektureinheit korrigiert ist, einen zweiten vorgeschriebenen Pegel überschreitet, der größer ist als der erste vorgeschriebene Pegel.

6.  Gleichspannungsnetzteilvorrichtung nach einem der Ansprüche 1 bis 5, wobei
    die Steuereinheit eine Amplitudenkomponente eines Stromwerts, der durch die Strominformation, die durch die Stromerfassungseinheit erfasst ist, oder durch die Strominformation dargestellt ist, die durch die Frequenzkennlinienkorrektureinheit korrigiert ist, über einen Zeitraum gleich oder größer als ein Zyklus der Wechselstromversorgung mittelt, und wenn der Mittelwert größer ist als ein dritter vorgeschriebener Pegel, die Steuereinheit die auszugebende Gleichspannung verringert.

7.  Anwendungssystem, umfassend:

    eine Gleichspannungsnetzteilvorrichtung nach einem der Ansprüche 1 bis 6; und
    einen Motor, angetrieben durch einen Ausgang der Gleichspannungsnetzteilvorrichtung, wobei
    eine Amplitudenkomponente eines Stromwerts, der durch die Strominformation dargestellt ist, die durch eine Stromerfassungseinheit der Gleichspannungsnetzteilvorrichtung erfasst ist, über einen Zeitraum gleich oder größer als ein Zyklus einer Wechselstromversorgung gemittelt wird, und wenn der Mittelwert größer ist als ein vierter vorgeschriebener Wert, eine Drehzahl des Motors verringert wird.

8.  Gleichspannungsnetzteilvorrichtung zum Umwandeln einer Wechselspannung in eine Gleichspannung, um die umgewandelte Gleichspannung auszugeben, umfassend:

    ein Schaltelement (312), ausgelegt, eine Wechselstromversorgung durch eine Drossel kurzzuschließen; und
    eine Steuereinheit (8), ausgelegt, das Schaltelement ein- und auszuschalten, sodass ein Strom, der von der Wechselstromversorgung fließt, eine im Wesentlichen sinusförmige Welle aufweist, wobei
    die Steuereinheit eine Gleichkomponente von der Wechselstromversorgung ohne ein Erfassen der Gleichkomponente von der Wechselstromversorgung entfernt durch ein Extrahieren einer Welligkeit einer Frequenzkomponente, die dieselbe ist wie eine Wechselstromversorgungsfrequenz und in einer auszugebenden Gleichspannung enthalten ist, und ein Korrigieren eines Ein-/ Ausschaltverhältnisses des ein- und auszuschaltenden Schaltelements gemäß der extrahierten Welligkeit der Frequenzkomponente, die dieselbe ist wie die Wechselstromversorgungsfrequenz, und einem Signal, erhalten durch ein Modulieren eines vorbestimmten Grundmusters oder eines auf einer Wechselspannungswellenform gemäß einer Abweichung zwischen der Gleichspannung und einer Soll-Gleichspannung basierenden Grundmusters, sodass die extrahierte Welligkeit der Frequenzkomponente, die dieselbe ist wie die Wechselstromversorgungsfrequenz, aufgehoben wird.

**Revendications**

1.  Dispositif d'alimentation en puissance en courant continu pour la conversion d'une tension alternative en une tension continue pour la livraison de la tension continue convertie, comprenant :

    un élément de commutation (312) configuré pour court-circuiter une alimentation en puissance en courant alternatif à travers un réacteur ;
    une unité de détecteur de courant (3) configurée pour détecter un courant circulant depuis l'alimentation en puissance en courant alternatif et délivrer le courant alternatif détecté en tant qu'information de courant ; et
    une unité de commande (8) configurée pour activer et désactiver l'élément de commutation de sorte qu'une forme d'onde d'un courant représenté par l'information de courant détectée par l'unité de détecteur de courant devienne une onde substantiellement sinusoïdale, dans lequel
    l'unité de commande supprime une composante continue provenant de l'alimentation en puissance en courant alternatif sans détecter la composante continue provenant de l'alimentation en puissance en courant alternatif en extrayant une ondulation d'une composante de fréquence qui est la même qu'une fréquence d'alimentation en puissance en courant alternatif et est contenue dans la tension continue devant être délivrée, en superposant à la composante de fréquence extraite une composante continue qui est dans une direction opposée et en corrigeant un ratio activation-désactivation de l'élément de commutation devant être activé et désactivé de sorte que soit neutralisée l'ondulation extraite de la composante de fréquence qui est la même que la fréquence d'alimentation en puissance en courant alternatif.

2. Dispositif d'alimentation en puissance en courant continu selon la revendication 1, dans lequel l'unité de détecteur de courant est un transformateur à courant alternatif.

3. Dispositif d'alimentation en puissance en courant continu selon la revendication 2, dans lequel l'unité de commande comprend une unité de correction de caractéristiques de fréquence configurée pour corriger l'information de courant détectée par le transformateur à courant alternatif à l'aide d'une caractéristique de fréquence du transformateur à courant alternatif, et l'unité de commande active et désactive l'élément de commutation de sorte qu'une forme d'onde d'un courant représenté par l'information du courant corrigée par l'unité de correction de caractéristiques de fréquence devienne une onde substantiellement sinusoïdale.

4. Dispositif d'alimentation en puissance en courant continu selon l'une quelconque des revendications 1 à 3, dans lequel l'unité de commande interrompt l'activation et la désactivation de l'élément de commutation lorsqu'une valeur absolue d'une valeur instantanée représentée par l'information de courant détectée par l'unité de détecteur de courant ou l'information de courant corrigée par l'unité de correction de caractéristiques de fréquence dépasse un premier niveau prescrit.

5. Dispositif d'alimentation en puissance en courant continu selon l'une quelconque des revendications 1 à 4, dans lequel l'unité de commande arrête l'activation et la désactivation de l'élément de commutation lorsque la valeur absolue de la valeur instantanée représentée par l'information de courant détectée par l'unité de détecteur de courant ou l'information de courant corrigée par l'unité de correction de caractéristiques de fréquence dépasse un second niveau prescrit supérieur au premier niveau prescrit.

6. Dispositif d'alimentation en puissance en courant continu selon l'une quelconque des revendications 1 à 5, dans lequel l'unité de commande moyenne une composante d'amplitude d'une valeur de courant représentée par l'information de courant détectée par l'unité de détecteur de courant ou l'information de courant corrigée par l'unité de correction de caractéristiques de fréquence sur un période égale ou supérieure à un cycle de l'alimentation en puissance en courant alternatif, et lorsque la valeur moyennée est supérieure à un troisième niveau prescrit, l'unité de commande décroît la tension continue devant être délivrée.

7. Système d'application, comprenant:

un dispositif d'alimentation en puissance en courant continu selon l'une quelconque des revendications 1 à 6; et un moteur entraîné par une livraison du dispositif d'alimentation en puissance en courant continu, dans lequel une composante d'amplitude d'une valeur de courant représentée par une information de courant détectée par une unité de détecteur de courant du dispositif d'alimentation en puissance en courant continu est moyennée sur une période égale ou supérieure à un cycle d'une alimentation en puissance en courant alternatif, et lorsque la valeur moyennée est supérieure à un quatrième niveau prescrit, une vitesse de rotation du moteur est diminuée.

8. Dispositif d'alimentation en puissance en courant continu pour la conversion d'une tension alternative en une tension continue pour la livraison de la tension continue convertie, comprenant:

un élément de commutation (312) configuré pour court-circuiter une alimentation en puissance en courant alternatif à travers un réacteur; et une unité de commande (8) configurée pour activer et désactiver l'élément de commutation de sorte qu'un courant circulant depuis l'alimentation en puissance en courant alternatif ait une onde substantiellement sinusoïdale, dans lequel

l'unité de commande supprime une composante continue provenant de l'alimentation en puissance en courant alternatif sans détecter la composante continue provenant de l'alimentation en puissance en courant alternatif en extrayant une ondulation d'une composante de fréquence qui est la même qu'une fréquence d'alimentation en puissance en courant alternatif et est contenue dans une tension continue devant être délivrée, en corrigeant un ratio activation-désactivation de l'élément de commutation devant être activé et désactivé en accord avec l'ondulation extraite de la composante de fréquence qui est la même que la fréquence d'alimentation en puissance en courant alternatif et un signal obtenu par modulation d'un schéma de base prédéterminé ou d'un schéma de base basé sur une forme d'onde de tension alternative en accord avec une déviation entre la tension continue et une tension continue cible, de sorte que soit neutralisée l'ondulation extraite de la composante de fréquence qui est la même que la fréquence d'alimentation en puissance en courant alternatif.

*Fig.1*

LOAD

CONTROL CIRCUIT

## Fig.2

INSTANTANEOUS AC VOLTAGE

INSTANTANEOUS CURRENT

DC VOLTAGE COMMAND

101

102 VOLTAGE SYSTEM COMPENSATION CALCULATOR

103 INSTANTANEOUS CURRENT COMMAND

104

105 CURRENT SYSTEM COMPENSATION CALCULATOR

106

107 POWER CIRCUIT

DC VOLTAGE

108 POWER SUPPLY FREQUENCY COMPONENT EXTRACTING UNIT

EP 2 421 139 B1

## Fig.3

(a) ALTERNATING CURRENT

(b) RECTIFIED CURRENT

(c) DC VOLTAGE

(d) POWER SUPPLY FREQUENCY COMPONENT

# Fig.4

$\pi/2$     $(5/2)\pi$     $(9/2)\pi$

$(3/2)\pi$    $(7/2)\pi$    $(11/2)\pi$

$\pi$   $2\pi$   $3\pi$   $4\pi$   $5\pi$   $6\pi$

(a) ALTERNATING CURRENT

0

(b) RECTIFIED CURRENT

(c) DC VOLTAGE

(d) POWER SUPPLY FREQUENCY COMPONENT

Fig.5

EP 2 421 139 B1

## Fig.6A

401

501  502  503

512  513

## Fig.6B

401

521  522  531

532

## Fig.6C

401

553 554

551  552

555 556

EP 2 421 139 B1

Fig.7

Fig.8

EP 2 421 139 B1

## Fig.9

EP 2 421 139 B1

*Fig.10*

FREQUENCY CHARACTERISTIC
OF CURRENT TRANSFORMER

CHARACTERISTIC OF FREQUENCY
CHARACTERISTIC CORRECTOR
CIRCUIT

FREQUENCY

POWER SUPPLY FREQUENCY

SENSITIVITY

## Fig.11

AC VOLTAGE PHASE

DC VOLTAGE
COMMAND

101

VOLTAGE SYSTEM
COMPENSATION
CALCULATOR
102

FIRST PATTERN
FUNCTION
110

106

POWER
CIRCUIT
107

DC VOLTAGE

POWER SUPPLY
FREQUENCY COMPONENT
EXTRACTING UNIT
108

SECOND PATTERN
FUNCTION
120

EP 2 421 139 B1

Fig.12

## Fig.13

EP 2 421 139 B1

## Fig.14

INSTANTANEOUS AC VOLTAGE

INSTANTANEOUS CURRENT

DC VOLTAGE
COMMAND

101

102
VOLTAGE SYSTEM
COMPENSATION
CALCULATOR

103
INSTANTANEOUS
CURRENT
COMMAND

104

105
CURRENT SYSTEM
COMPENSATION
CALCULATOR

801
DC COMPONENT
REMOVING
CIRCUIT

107
POWER
CIRCUIT

DC VOLTAGE

EP 2 421 139 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002359976 A
- EP 1919064 A2
- DE 19854567 A1
- EP 0784372 A2
- JP 2001045763 A